(19) Europäisches Patentamt
European Patent Office
Office européen des brevets

(11) Publication number: **0 026 962**
**A1**

(12) # EUROPEAN PATENT APPLICATION

(21) Application number: **80301893.6**

(22) Date of filing: **06.06.80**

(51) Int. Cl.³: **C 01 B 33/28**, B 01 J 29/28

(30) Priority: **09.10.79 US 82824**

(43) Date of publication of application: **15.04.81**
**Bulletin 81/15**

(84) Designated Contracting States: **BE DE FR GB IT NL**

(71) Applicant: **MOBIL OIL CORPORATION, 150 East 42nd Street, New York New York 10017 (US)**

(72) Inventor: **Olson, David Harold, 11 Morningside Drive, Pennington Mercer County New Jersey (US)**
Inventor: **Rollmann, Louis Deane, 3 Dorann Avenue, Princeton Mercer County New Jersey (US)**
Inventor: **Valyocsik, Ernest William, 960 Randolph Drive, Yardley Bucks County Pennsylvania (US)**

(74) Representative: **Cooper, John Anthony, Mobil Court 3 Clements Inn, London WC2A 2EB (GB)**

(54) **Method of synthesing large crystal zeolite ZSM-5 with controlled production of small crystals, and zeolite produced by this method.**

(57) Method for reproducibly controlling the deposition of layers of small crystal zeolite ZSM-5 of less than 0.5 micron on large crystal zeolite ZSM-5 (1 to 100 microns) which occurs in the synthesis of large crystal zeolite ZSM-5 from a reaction mixture of alumina, silica, alkali metal oxide, water and tetraalkylammonium compounds, by variation of the initial $OH^-/SiO_2$ mole ratio over a broad range between 0.01 and 0.50.

Effect of $OH/SiO_2$ On the Quantity of Small Crystal Component

$SiO_2/Al_2O_3 = 180$, $H_2O/SiO_2 = 40$, $Na/SiO_2 = 0.59$, $TPA/SiO_2 = 0.1$, $TMA/SiO_2 = 0.1$, 16 hrs. @ 160°C.

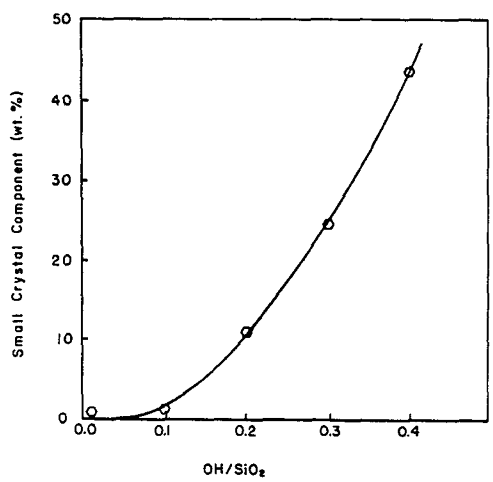


EP 0 026 962 A1

ACTORUM AG

# SYNTHESIS OF LARGE CRYSTAL ZEOLITE ZSM-5

The present invention relates to a method for controlling the deposition of small crystal zeolite ZSM-5 on large crystal zeolite ZSM-5 when producing the same.

Zeolite ZSM-5 is a relatively new zeolite which in its conventionally synthesized aluminosilicate form has the following composition expressed in terms of mole ratios of oxides in the anhydrous state:

$$0.9 \pm 0.2\ M_{2/n}O \ :\ Al_2O_3 \ :\ xSiO_2$$

wherein M is selected from a group consisting of a mixture of tetraalkylammonium cations, the alkyl groups of which contain 2-5 carbon atoms, and alkali metal cations, especially sodium and x is at least 5. ZSM-5 has a distinctive X-ray diffraction pattern which further identifies it from other known zeolites. The original alkali metal cations of ZSM-5 can be exchanged by ion exchange with other ions to form species of the zeolite which have exceptional catalytic properties. Zeolite ZSM-5 and its conventional preparation are the subject of U.S. Patent 3,702,886. That patent discloses an average particle diameter of less than 1/2 micron. By the present invention there is obtained an average particle diameter between about 1 and 100 microns, i.e., large crystal zeolite ZSM-5, wherein by adjustment of process variables, specifically the $OH^-/SiO_2$ ratio within wide ranges, small crystal ZSM-5, i.e. less than 0.5 micron, production can be controlled.

Methods of preparing large crystal ZSM-5 have been known for a number of years; however, some preparations have resulted in a bimodal crystal distribution in which the large crystals are coated with a small crystal ZSM-5 component. The amount of the small crystal component can be determined from sorption studies and it can also be observed as a peeling layer in SEM photographs after HF treatment. This small crystal coating can be potentially harmful since it effectively decreases the diffusion path for processes where the larger

diffusion path of ZSM-5 is beneficial. These processes include alkylation of toluene with methanol to para-sylene, selective toluene disproportionation, methanol to gasoline and para-ethyltoluene production.

By the method of this invention, we have found that at low $OH/SiO_2$ ratios, no small crystal coating occurs.

In accordance with the present invention there is provided a method for reproducibly controlling the deposition of layers of small crystal zeolite ZSM-5 having an average particle diameter of less than 0.5 micron which occurs when preparing a large crystal ZSM-5 having an average particle diameter between about 1 and 100 microns. In the exercise of this invention, the ZSM-5 employed has the following formula in terms of mole ratios of oxides in the anhydrous state:

$$(0\text{-}20)\ M_2O \cdot (0\text{-}20)\ Al_2O_3 \cdot 100\ SiO_2$$

wherein M is at least one cation. M can be an alkali metal, e.g. sodium, and tetralkylammonium cations, the alkyl group containing 2-5 carbon atoms.

Reproducible control is achieved by varying the initial $OH^-/SiO_2$ ratio in the large crystal forming reaction mixture.

Figure 1 shows HF treated ZSM-5 crystals demonstrating the presence of small crystal layers;

Figure 2 is an SEM photographic rendition of a crystal material produced by the example 4 of the invention;

Figure 3 shows o-xylene sorption rate curves on ZSM-5 crystals with and without small crystal component;

Figure 4 shows the influence of $OH^-/SiO_2$ mole ratio on the quantity of small crystal component.

Zeolite ZSM-5 has been conventionally prepared by forming a mixture of alumina, silica, alkali metal oxide, water and tetraalkylammonium compounds such that the mixture has a composition, in terms of mole ratios of oxides, falling within the following range:

$$Al_2O_3/SiO_2 = 0\text{-}0.2$$

$$H_2O/SiO_2 = 5\text{-}200$$

$$OH^-/SiO_2 = 0.07\text{-}10.0$$

$$M/SiO_2 = .01\text{-}3.0$$

$$R/SiO_2 = .01\text{-}1.0$$

wherein M is an alkali metal ion and R is a tetraalkylammonium cation, the alkyl groups of which contain 2-5 carbon atoms. In addition tetramethylammonium ions (TMA) may be present in a $TMA/SiO_2$ ratio of 0.01-0.5. The reaction mixture is maintained at a temperature of from about 100°F (38°C) to about 400°F (204°C) until crystals of ZSM-5 are formed.

Zeolite ZSM-5 possesses a definite distinguishing crystalline structure whose X-ray diffraction pattern shows the following significant lines:

TABLE I

| Interplanar Spacing d (A) | Relative Intensity |
|---|---|
| 11.1 ± 0.3 | S |
| 10.0 ± 0.3 | S |
| 7.4 ± 0.2 | W |
| 7.1 ± 0.2 | W |
| 6.3 ± 0.2 | W |
| 6.04 ± 0.2 | W |
| 5.56 ± 0.1 | W |
| 5.01 ± 0.1 | W |
| 4.60 ± 0.08 | W |
| 4.25 ± 0.08 | W |
| 3.85 ± 0.07 | VS |
| 3.71 ± 0.05 | S |
| 3.04 ± 0.03 | W |
| 2.99 ± 0.02 | W |
| 2.94 ± 0.02 | W |

These values were determined by standard technique. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, $100I/I_o$, where $I_o$ is the intensity of the strongest line or peak, and d (obs), the interplanar spacing in A, corresponding to the recorded lines, were calculated. In Table I the relative intensities are given in terms of the symbols W=Weak, S=Strong and VS=Very Strong. It should be understood that this X-ray diffraction pattern is characteristic of all the species of ZSM-5 zeolites. Ion exchange of the sodium ion with cations reveals substantially the same pattern with some minor shifts in interplanar spacing and

variation in relative intensity. Other minor variations can occur depending on the silicon to aluminum ratio of the particular sample, as well as if it has been subjected to thermal treatment.

In the present method of preparing a large crystal ZSM-5 crystalline zeolite, a reaction mixture is prepared comprising sources of alkali metal, alumina, silica, organic nitrogen-containing cations, and water, as before, except that the initial $OH^-/SiO_2$ ratio is controlled over a broad range between 0.01 and 0.50 and preferably between 0.01 and 0.10. It has been found earlier that crystal size increases as the $OH^-/SiO_2$ ratio decreases. It has been found in this invention that maintaining the initial $OH^-/SiO_2$ at less than 0.10 minimizes the small crystal component, while maintaining the $OH^-/SiO_2$ at greater than 0.10 can produce a definite proportion of small crystal coating on large crystal ZSM-5. The reaction mixture is maintained at a temperature of from about 100°F (38°C) to about 500°F (260°C) for a period of time of from about 1 hour to about 180 days until crystals of ZSM-5 are formed. A more preferred temperature range is from about 180°F (82°C) to about 350°F (177°C) for a period of time at a temperature within such preferred range being from about 2 hours to about 30 days.

It is recalled that in calculating the mole ratio of hydroxide ions/silica, it is conventional to calculate hydroxide by summing moles of $OH^-$, whether added as NaOH, as quaternary ammonium hydroxide (in the case of a conventional preparation), as sodium silicate ($NaOH + SiO_2$), as sodium aluminate ($NaOH + Al_2O_3$), or the like, and to subtract from that sum any moles of acid added. Acid may be added simply as HCl, $HNO_3$, $H_2SO_4$, acetic acid, and the like, or it may be added as an aluminum sulfate ($Al_2O_3 + H_2SO_4$), chloride ($Al_2O_3$ + HCl), nitrate ($Al_2O_3 + HNO_3$), etc. Each mole of $Al_2O_3$ is itself equivalent to 2 moles of acid in this calculation, since

$Al_2O_3$ consumes 2 moles of hydroxide in its conversion to framework aluminate ion. In particular, no contribution is assigned to organic bases such as amines in this calculation. Amines present in reaction mixtures having an $OH^-/SiO_2$ ratio of 0.01 are protonated when further acid is added. Until said additional acid exceeds the amine present, the pH remains above 7.

The digestion of the gel particles is carried out until crystals form. The solid product is separated from the reaction medium, as by cooling the whole to room temperature, filtering and water washing.

The composition for the synthesis of ZSM-5 can be prepared utilizing materials which can supply the appropriate oxide. Such materials include aluminates, alumina, silicates, silica hydrosol, silica gel, silicic acid and hydroxides. It will be understood that each oxide component utilized in the reaction mixture for preparing ZSM-5 can be supplied by one or more essential reactants and they can be mixed together in any order. For example, any oxide can be supplied by an aqueous solution, sodium hydroxide or by an aqueous solution of a suitable silicate; the organic nitrogen-containing cation can be supplied by a compound of that cation, such as, for example, a salt. The reaction mixture can be prepared either batchwise or continuously. Crystal size and crystallization time of the ZSM-5 composition will vary with the nature of the reaction mixture employed. In the present case in order to prepare large crystal ZSM-5 zeolite the initial $OH^-/SiO_2$ ratio will depend on what is desired to be accomplished. In other words, do we want to minimize the small crystal ZSM-5 component ($OH^-/SiO_2 < 0.10$); or do we want to grow a definite proportion of small crystal ZSM-5 on large crystal ZSM-5 ($OH^-/SiO_2 > 0,10$)?

The ZSM-5 composition as prepared hereby has the characteristic X-ray diffraction pattern of conventionally prepared ZSM-5, the values of which are set forth in Table I.

Even though the presently prepared ZSM-5 can often have a low amount of alkali metal e.g. sodium, ions, as synthesized and therefore can be utilized as catalytic material for a number of hydrocarbon conversion reactions substantially as synthesized, the original cations of the as synthesized ZSM-5 can be replaced in accordance with techniques well known in the art, at least in part, by ion exchange with other cations. Preferred replacing cations include metal ions, ammonium ions, hydrogen ions and mixtures thereof. Particularly preferred cations are those which render the zeolite catalytically active especially for hydrocarbon conversion. These include hydrogen, rare earth metals, aluminum, metals of Groups IIA, IIIB, IVB, VIB, VIII, IB, IIB, IIIA, IVA. Of the replacing metallic cations, particular preference is given to cations of metals such as rare earth, Mn, Ca, Mg, Zn, Cd, Pd, Ni, Co, Ti, Al, Sn, Fe and Co.

A typical ion exchange technique would be to contact the synthetic ZSM-5 zeolite after calcination with a solution of salt of the desired replacing cation or cations. Although a wide variety of salts can be employed, particular preference is given to chlorides, nitrates and sulfates.

Representative ion exchange techniques are disclosed in a wide variety of patents including United States Patents 3,140,249; 3,140,251; and 3,140,253.

Following contact with the salt solution of the desired replacing cation, the zeolite is then preferably washed with water and dried at a temperature ranging from 150°F (66°C) to about 600°F (316°C) and thereafter may be calcined in air or other inert gas at temperatures ranging from about 500°F (260°C) to 1500°F (816°C) for periods of time ranging from

1 to 48 hours or more to produce a catalytically-active thermal decomposition product thereof.

Regardless of the cation replacing the cations in the synthesized form of the ZSM-5, the spatial arrangement of the aluminum, silicon and oxygen atoms which form the basic crystal lattices of ZSM-5 remains essentially unchanged by the described replacement of the original cations as determined by taking an X-ray powder diffraction pattern of the ion-exchanged material.

The hereby prepared zeolite ZSM-5 may be used in the conversion of a wide variety of organic compounds, e.g. hydrocarbon compounds and oxygenates such as methanol. Such processes include, for example alkylation of aromatics with olefins, aromatization of normally gaseous olefins and paraffins, aromatization of normally liquid low molecular weight paraffins and olefins, isomerization of aromatics, paraffins and olefins, disproportionation of aromatics, transalkylation of aromatics, oligomerization of olefins and cracking and hydrocracking. All of the foregoing catalytic processes are of value since they result in upgrading of the organic charge being processed. The special catalytic advantages of large crystal size are illustrated in U.S. Patent 4,117,026 for example.

In the past few years the potential use of large crystal ZSM-5 in numerous catalytic processes has been demonstrated. These processes include alkylation of toluene with methanol, selective toluene disproportionation, methanol to gasoline and p-ethyltoluene production. Selectivity gains in these processes result from the conversion of an undesirable, diffusionally limited intracrystalline product to a smaller, more desirable product which leaves the crystal more readily with less chance of further reaction. Further reaction is limited by the more diffusionally restrictive large crystal ZSM-5.

Although methods of preparing large crystal ZSM-5 have been known for many years, some preparations have resulted in a bimodal crystal distribution in which the large crystals are coated with a small crystal ZSM-5 component. For some applications this small crystal coating will substantially reduce selectivity while for others it might be advantageous if it could be produced in a controlled fashion i.e., as a given fraction of the total ZSM-5.

It is to further the potential of large crystal ZSM-5 and the need to control bimodal crystal growth that this invention is directed.

Synthetic ZSM-5 zeolites prepared in accordance hereto can be used either in the organic nitrogen-containing or alkali metal form and hydrogen form or another univalent or multivalent cationic form. They can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated in or on to ZSM-5 such as, for example, by, in the case of platinum, treating the zeolite with a platinum metal-containing ion. Thus, suitable platinum compounds for this purpose include chloroplatinic acid, platinous chloride and various compounds containing the platinum amine complex. Combinations of metals and methods for their introduction can also be used.

In the case of many catalysts, it is desired to incorporate the ZSM-5 hereby prepared with another material resistant to the temperatures and other conditions employed in organic conversion processes. Such matrix materials include active

and inactive materials and synthetic or naturally occurring zeolites as well as inorganic materials such as clays, silica and/or metal oxides. The latter may be either naturally occurring or in the form of gelatinous precipitates, sols or gels including mixtures of silica and metal oxides. Use of a material in conjunction with the ZSM-5, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. Frequently, zeolite materials have been incorporated into naturally occurring clays, e.g. bentonite and kaolin. These materials, i.e. clays, oxides, etc., function, in part, as binders for the catalyst. It is desirable to provide a catalyst having good crush strength, because in a petroleum refinery the catalyst is often subjected to rough handling, which tends to break the catalyst down into powder-like materials which cause problems in processing.

Naturally occurring clays which can be composited with the hereby synthesized ZSM-5 catalyst include the montmorillonite and kaolin family, which families include the sub-bentonites, and the kaolins commonly known as Dixie, McNammee, Georgia and Florida clays or others in which the main mineral constituent is halloysite, kaolinite, dickite, nacrite, or anauxite. Such clays can be used in the raw state or initially subjected to calcination, acid treatment or chemical modification.

In addition to the foregoing materials, the ZSM-5 catalyst hereby synthesized can be composited with a porous matrix material such as silica-alumina, silica-magnesia, silica-zirconia, silica-thoria, silica-beryllia, silica-titania as

well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline aluminosilicate ZSM-5 and inorganic oxide gel matrix vary widely with the crystalline aluminosilicate content ranging from about 1 to about 90 percent by weight and more usually in the range of about 10 to about 70 percent by weight of the composite.

In order to more fully illustrate the nature of the invention and the manner of practicing same, the following examples are presented.

Examples 1-10

Syntheses were carried out in a conventional manner in stirred autoclaves with Q-brand sodium silicate, $Al_2(SO_4)_3 \cdot 16H_2O$, tetrapropylammonium bromide (TPABr) and tetramethylammonium bromide (TMABr). A five hour heat up time was performed for most syntheses. The heat up rate and crystallization temperature were carefully controlled with a temperature programmer. Table 1 is a compilation (Examples 1-10) of crystallization data where mole ratios of $SiO_2/Al_2O_3$, $H_2O/SiO_2$, $OH/SiO_2$, $Na/SiO_2$, $TPA/SiO_2$, and $TMA/SiO_2$ describe the reaction mixture compositions. Again the moles of $OH^-$ are defined as moles of $OH^-$ added less any moles of hydrogen ions added to the mixture as sulfuric acid, and recognizing the consumption of 2 moles of $OH^-$ on incorporation of $Al_2O_3$ into framework $AlO_2^-$. The sulfuric acid added to the mixtures was assumed to be 100%. If correction is made for the actual concentration of sulfuric acid, this adds approximately 0.02 to the $OH/SiO_2$ value.

The syntheses described herein were conducted with $SiO_2/Al_2O_3 = 180$.

As synthesized materials were prepared for sorption and diffusion measurements by converting them to the ammonium form as follows:

(1) Programmed air calcination consisting of heating 2°C/min to 538°C followed by heating 10 hours at 538°C.

(2) Ion exchanging for 2 hours, at 25°C, with stirring, with 50 ml of 1.0 N $NH_4Cl$ solution per gram of zeolite.

Selected ammonium exchanged samples were treated for 3 hours at 25°C with 20 ml of a 5% HF solution per gram of zeolite. This was followed by Scanning Electron Microscopic (SEM) examination.

SEM examination was conducted on a standard scanning electron microscope. The SEM photos are shown in Figures 1 and 2. The times noted on the Figures refer to the time at crystallization temperature, i.e., 160°C.

Sorption and diffusion measurements were conducted on a thermogravimetric analyzer. The small crystal component was determined from Q (amount sorbed in mg/g) versus $t^{1/2}$ (min) plot (illustrated in Figure 3) by extrapolating the large crystal sorption component, the first linear region beyond about $t^{1/2=2}$, to zero time and assuming Q at $t = \infty$ to be 64.5 mg/g.

TABLE 1

Crystallization of ZSM-5

Q-Brand; $Al_2(SO_4)_3$ 16 $H_2O$

$SiO_2/Al_2O_3 = 180^1$

160°C; stirred 1000 rpm

$H_2O/SiO_2 = 40$; $Na/SiO_2 = 0.6$;

$TPA/SiO_2 = 0.10 = TMA/SiO_2$[a]

| Ex. | Hours Run Time (b) | Mixture $OH/SiO_2$ (a) | Product Crystallinity | Product Morphology | Small Crystal Component (wt%) |
|---|---|---|---|---|---|
| 1 | 68 | 0.30 | 83% | 1 - 5u spheriods | 19 |
| 2 | 21 | 0.30 | 86% | 0.5 - 5u spheriods | 24 |
| 3 | 68 | 0.20 | 89% | 0.5 - 5u spheriods | 10 |
| 4 | 21 | 0.20 | 90% | 0.5 - 5u spheriods | 11 |
| 5 | 11 | 0.20 | 95% | 1 - 5u spheriods | 14 |
| 6 | 8 | 0.20 | 98% | 1 - 5u rounded blocks | 18 |
| 7 (c) | 21 | 0.10 | 95% | 1 - 5u rounded blocks | 1 |
| 8 | 68 | 0.01 | 100% | 0.5 - 15u twinned blocks | 2 |
| 9 | 48 | 0.01 | 100% | 1 - 10u twinned blocks | 1 |
| 10 | 21 | 0.01 | 100% | 1 - 5u blocks | 1 |

(a) mole ratios

(b) 5 hour heat up to 160°C

(c) 1 hour heat up to 160°C; stirred 350 rpm

The SEM photographs (HF treat) in Figure 1 shows that shell growth has occurred. This figure may be compared with the SEM photographs of this material before HF treatment (Figure 2). From the SEM photographs, and sorption rates it was concluded that the shell is a small crystal component.

Estimates of the percentage of this small crystal component were obtained from the o-xylene sorption curves.

The data shows that the quantity of small crystal component is a function of $OH/SiO_2$ ratio. This is shown in Figure 4 for the 16 hour crystallization time preparations. For this set of process variables the data extrapolate to zero small crystal component at $OH/SiO_2 = 0.1$ at our conditions of $H_2O/SiO_2 = 40$.

WHAT IS CLAIMED IS:

1. In a method for preparing a large crystal zeolite ZSM-5 having an average particle diameter betwen about 1 and 100 microns while controlling small crystal zeolite ZSM-5 component having an average particle diameter of less than about 0.5 micron from a starting reaction mixture containing sources of an alkali metal oxide, $R_2O$, an oxide of aluminum, an oxide of silicon, and water, wherein R is $C_2$-$C_5$ tetraalkylammonium cation and maintaining said mixture under crystallization conditions, the improvement which comprises initiating the crystallization at an $OH^-/SiO_2$ mole ratio of between about 0.01 and less than 0.10 for minimization of said small crystal zeolite ZSM-5 component and at a $OH^-/SiO_2$ mole ratio between greater than 0.10 and 0.5 for fixed amounts of small crystal zeolite ZSM-5 coating on said large crystal ZSM-5.

2. The method of Claim 1 wherein the initial $OH^-/SiO_2$ mole ratio is between about 0.01 and 0.10.

3. The method of Claim 1 wherein the initial $OH^-/SiO_2$ mole ratio of between about 0.10 and 0.5.

4. The crystalline zeolite produced by the method of Claims 1, 2 or 3.

5. The method of Claim 1 wherein the starting reaction mixture additionally contains a source of tetramethylammonium cations.

FIGURE I

HF treated 16 hour - 0.2 $OH/SiO_2$ NG-906

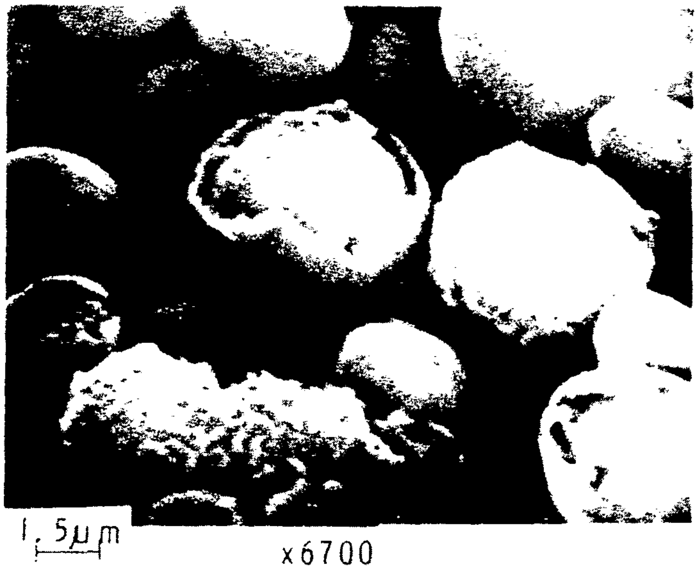

1.5 μm x6700

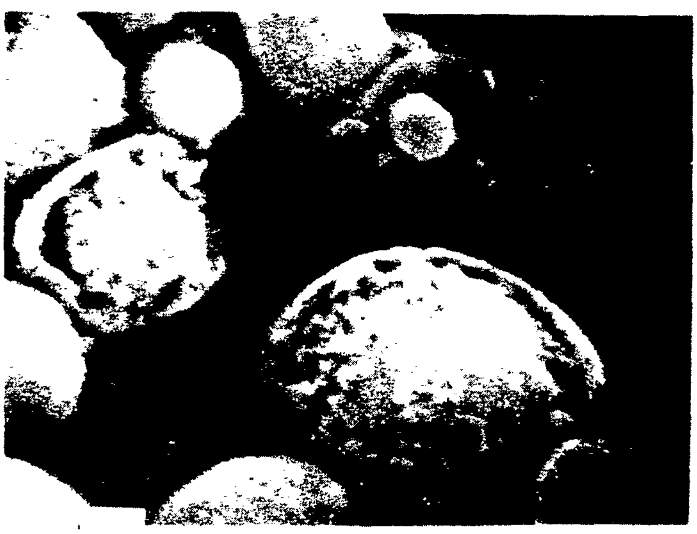

FIGURE 2

16 hour-0.01 $OH/SiO_2$ 111201-1

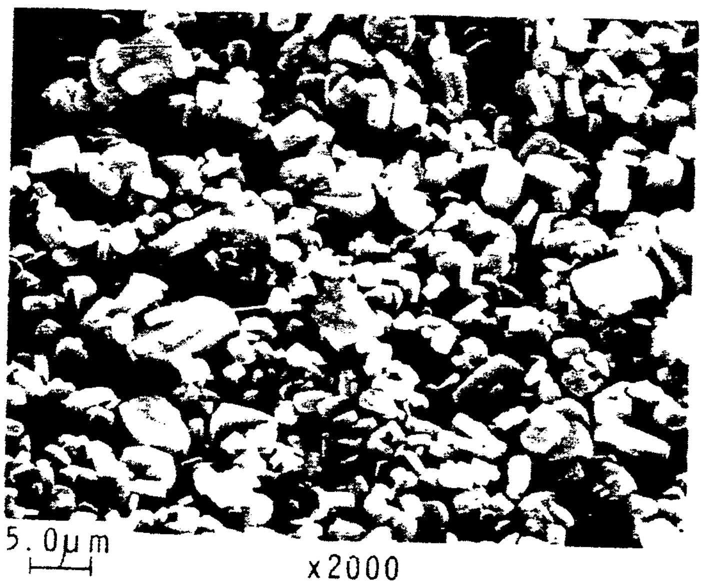


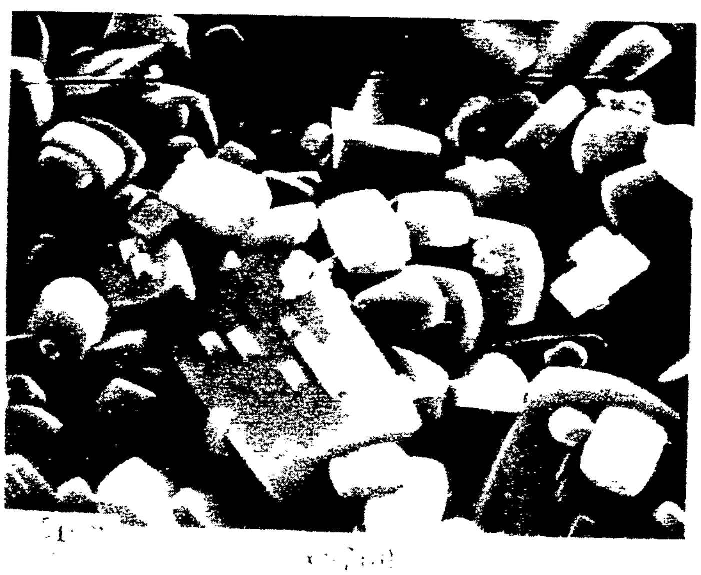

# FIGURE 3

ZSM-5- CRYSTALLIZATION-EFFECT OF $OH/SiO_2$

O-XYLENE SORPTION, AT 120 C & 3.7 MM O-XYLENE, ON HZSM-5

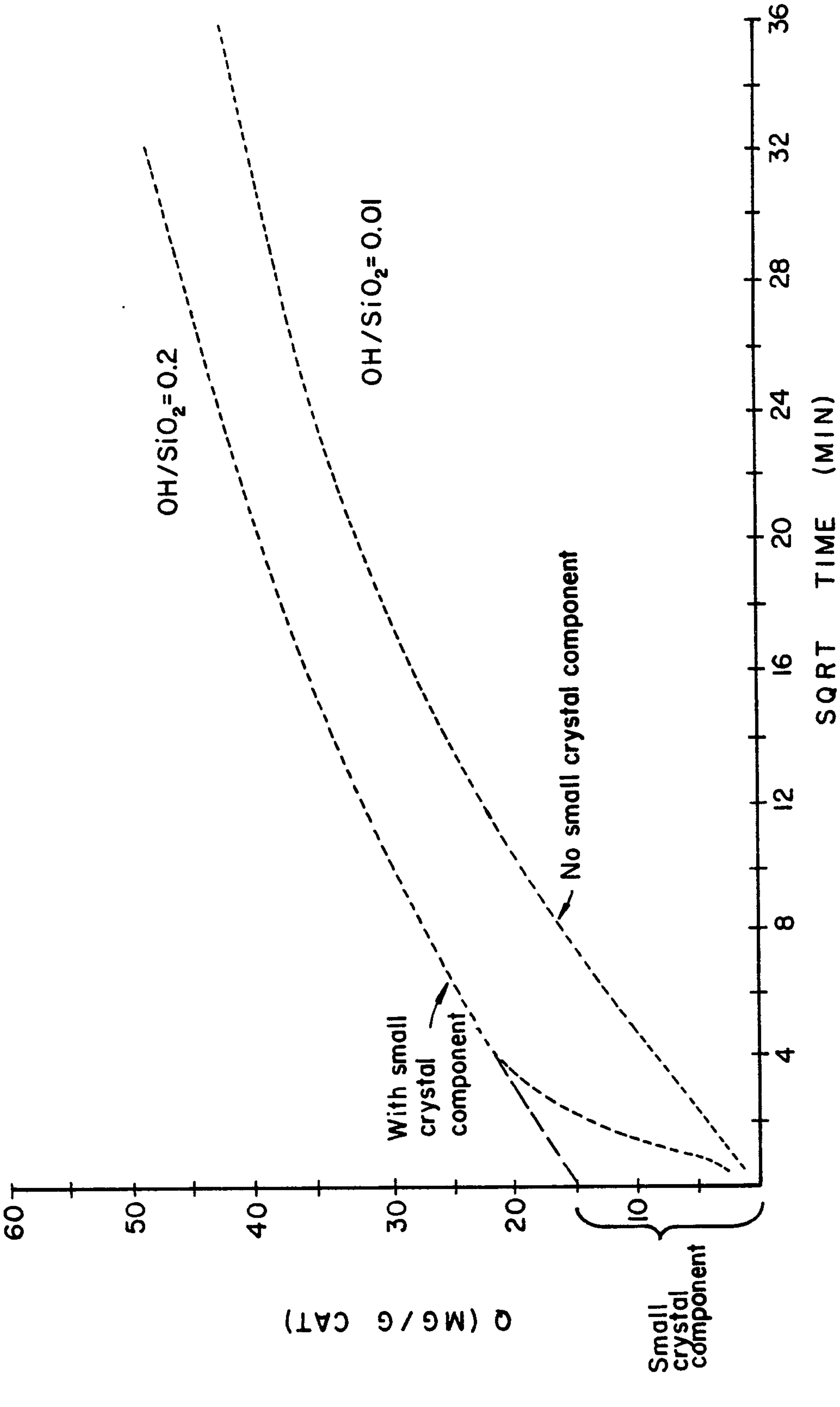

# FIGURE 4

Effect of $OH/SiO_2$ On the Quantity of Small Crystal Component

$SiO_2/Al_2O_3 = 180$, $H_2O/SiO_2 = 40$, $Na/SiO_2 = 0.59$,

$TPA/SiO_2 = 0.1$, $TMA/SiO_2 = 0.1$, 16 hrs. @ 160°C.

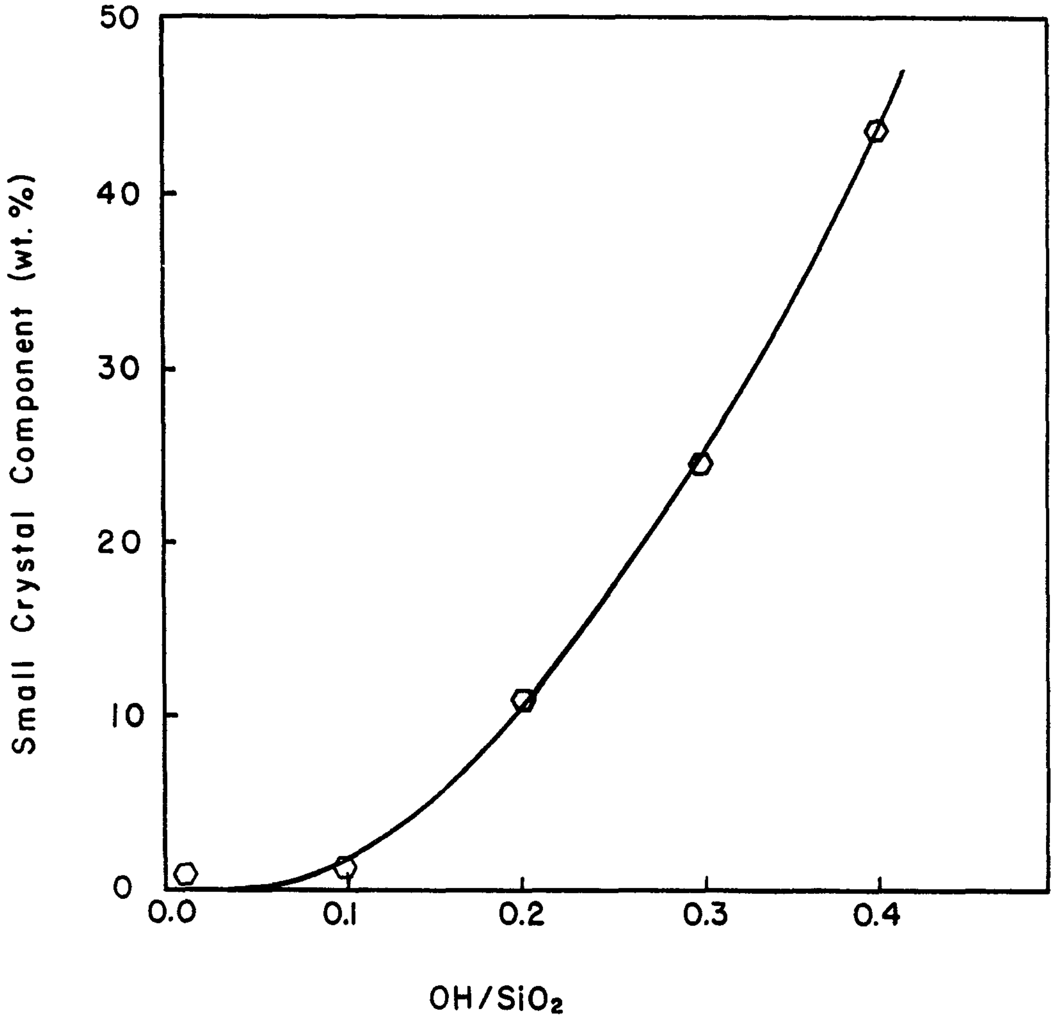

European Patent Office

# EUROPEAN SEARCH REPORT

0026962

Application number

EP 80 30 1893.6

## DOCUMENTS CONSIDERED TO BE RELEVANT

| Category | Citation of document with indication, where appropriate, of relevant passages | Relevant to claim |
|---|---|---|
| | DE - A1 - 2 817 577 (MOBIL OIL)<br>* claims 1 to 3; pages 20 to 22 * | 1-3 |
| | US - A - 4 139 600 (L.D. ROLLMANN et al.)<br>* column 6, lines 41 to 58 * | 1 |
| | GB - A - 2 002 733 (MOBIL OIL)<br>* claims 1 to 4 * | 5 |
| A | DE - A1 - 2 822 725 (MOBIL OIL) | |
| D | US - A - 4 117 026 (W.O. HAAG et al.) | |
| D | US - A - 3 702 886 (R.J. ARGAUER et al.) | |

CLASSIFICATION OF THE APPLICATION (Int. Cl.3)

C 01 B 33/28
B 01 J 29/28

TECHNICAL FIELDS SEARCHED (Int.Cl.3)

B 01 J 29/00
C 01 B 33/28

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 22-09-1980 | KESTEN |